# EUROPÄISCHE PATENTANMELDUNG

(11) **EP 1 365 147 A2**
(43) Veröffentlichungstag der Anmeldung: **26.11.2003**
(21) Anmeldenummer: 03011682.6
(22) Anmeldetag: 23.05.2003
(51) Int. Cl.: F03D 11/00

(54) **Gleitlager für Windenergieanlagen**

(30) Priorität: 24.05.2002 DE 10223125
(71) Anmelder: AB SKF, S-415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Gosdin, Michael

(57) **Zusammenfassung**

Die Erfindung betrifft ein Gleitlager für eine Windenergieanlage und ein Verfahren zum Einstellen des Spiels des Gleitlagers. Das Gleitlager weist einen ersten Lagerring (5) auf, der in Axialrichtung aus einem ersten Ringteil (6) und einem zweiten Ringteil (7) zusammengesetzt ist, die miteinander einen Ringraum (19) ausbilden. Weiterhin weist das Gleitlager einen zweiten Lagerring (13) auf, der radial in den Ringraum (19) hineinragt und mit dem ersten Ringteil (6) und dem zweiten Ringteil (7) jeweils in Gleitkontakt steht. Schließlich weist das Gleitlager eine Einrichtung zur Einstellung eines vorgebbaren Wertes für die axiale Ausdehnung des Ringraums (19) im in der Windenergieanlage eingebauten Zustand des Gleitlagers auf.

## Beschreibung

Die Erfindung betrifft ein Gleitlager für eine Windenergieanlage.

Ein derartiges Gleitlager ist aus der DE 100 12 773 A1 bekannt. Das bekannte Gleitlager weist axial wirkende und radial wirkende Gleitflächen auf, die senkrecht zur Axialrichtung bzw. senkrecht zur Radialrichtung orientiert sind. Die axial wirkenden Gleitflächen können mittels hydraulischer Kolben mehr oder weniger stark gegen ihre Gegenflächen gepresst werden.

Insbesondere bedingt durch die hydraulische Verstellung der Gleitflächen ist die bekannte Lageranordnung relativ aufwändig aufgebaut und weist eine Vielzahl von Komponenten auf, die regelmäßig gewartet werden müssen.

Der Erfindung liegt die Aufgabe zugrunde, eine Lagerung für eine Windenergieanlage anzugeben, die mit einem möglichst geringen Wartungsaufwand über einen möglichst langen Betriebszeitraum einsetzbar ist.

Diese Aufgabe wird durch die Merkmalskombination des Anspruchs 1 gelöst.

Das erfindungsgemäße Gleitlager für eine Windenergieanlage weist einen ersten Lagerring auf, der in Axialrichtung aus einem ersten und einem zweiten Ringteil zusammengesetzt ist, die miteinander einen Ringraum ausbilden. Weiterhin weist das erfindungsgemäße Gleitlager einen zweiten Lagerring auf, der radial in den Ringraum hineinragt und mit dem ersten Ringteil und dem zweiten Ringteil jeweils in Gleitkontakt steht. Schließlich verfügt das erfindungsgemäße Gleitlager noch über eine Einrichtung zur Einstellung eines vorgebbaren Wertes für die axiale Ausdehnung des Ringraums im in der Windenergieanlage eingebauten Zustand des Gleitlagers. Das erfindungsgemäße Gleitlager hat den Vorteil, dass es wartungsarm ist und somit über seine gesamte Betriebsdauer nur relativ geringe Wartungskosten verursacht. Ein weiterer Vorteil besteht darin, dass das Lagerspiel ohne Demontage des Gleitlagers eingestellt werden kann und somit ein erheblicher Zusatzaufwand eingespart wird. Infolge dieser einfachen Spieleinstellmöglichkeit ist eine sehr lange Gebrauchsdauer des erfindungsgemäßen Gleitlagers möglich, da verschleißbedingte Änderungen der Geometrie nachjustiert werden können. Die Nachregelung der durch Verschleiß verursachten Geometrieänderungen eröffnet weiterhin die Möglichkeit, die Gleitflächen gleichzeitig zum Bremsen zu verwenden. Weitere Vorteile bestehen darin, dass das erfindungsgemäße Gleitlager einen relativ konstanten Reibkoeffizienten über die gesamte Gebrauchsdauer aufweist und robust und unempfindlich gegen Korrosion und Verschmutzung ist. Außerdem ist es vorteilhaft, dass Vibrationen und Stöße durch das beim Gleitlager verwendete Gleitmaterial gedämpft werden.

Die Einrichtung zur Einstellung der axialen Ausdehnung des Ringraums kann wenigstens ein Anschlagelement umfassen, das die axiale Annäherung des ersten und des zweiten Ringteils aneinander begrenzt. Dies hat den Vorteil, dass die Spieleinstellung sehr einfach und schnell durchführbar ist. Das erste und das zweite Ringteil können durch in Axialrichtung verlaufende Verbindungsschrauben miteinander verbunden sein. Dadurch kann zum einen eine zuverlässige Verbindung zwischen den beiden Ringteilen hergestellt werden und zum anderen wird ein sehr feinfühliges Annähern der beiden Ringteile aneinander und somit eine sehr präzise Spieleinstellung ermöglicht.

Die Anschlagelemente können als Buchsen zur Aufnahme der Verbindungsschrauben im Bereich des ersten Ringteils oder des zweiten Ringteils ausgebildet sein. Dabei können die Buchsen in axialen Durchgangsbohrungen im ersten Ringteil oder im zweiten Ringteil angeordnet sein, die kürzer sind als die Buchsen, so dass die axiale Ausdehnung des Ringraum durch die Längen der Buchsen vorgegeben wird. Die Verwendung von Buchsen als Anschlagelemente hat den Vorteil, dass diese sehr kostengünstig verfügbar sind. Da die Länge der Buchsen mit hoher Präzision vorgegeben werden kann, ist zudem eine sehr exakte Spieleinstellung möglich. In einer Variante können die Buchsen auch jeweils ein Außengewinde aufweisen, das in eine Gewindebohrung im ersten Ringteil oder im zweiten Ringteil des ersten Lagerrings eingreift, so dass die axiale Ausdehnung des Ringraums durch Verdrehen der Buchsen einstellbar ist. Dies hat den Vorteil, dass die Länge der Buchsen nicht verändert werden muss bzw. die Buchsen nicht ausgetauscht werden müssen.

In einer weiteren Variante können die Anschlagelemente als Distanzscheiben ausgebildet sein, die zwischen dem ersten Ringteil und dem zweiten Ringteil angeordnet sind. Die Verwendung von Distanzscheiben hat den Vorteil, dass diese besonders kostengünstig sind.

Das erfindungsgemäße Gleitlager kann eine Erfassungseinrichtung zur Erfassung der Änderung der axialen Ausdehnung des Ringraums oder einer damit zusammenhängenden Größe aufweisen. Dies hat den Vorteil, dass das Spiel ohne großen Aufwand erfasst werden kann und auch über die gesamte Gebrauchsdauer des Gleitlagers überwacht werden kann, so dass eine gezielte Spieleinstellung erfolgen kann, wenn dies erforderlich sein sollte.

Zur Ausbildung eines direkten oder indirekten Gleitkontakts stehen sich im Bereich des Ringraums jeweils vorzugsweise eine Axialfläche des ersten Ringteils des ersten Lagerrings und eine Axialfläche des zweiten Lagerrings sowie eine Kegelstumpffläche des zweiten Ringteils des ersten Lagerrings und eine Kegelstumpffläche des zweiten Lagerrings gegenüber. Dadurch ist zum einen gewährleistet, dass in einer Richtung eine sehr hohe Axialkraft aufgenommen werden kann. Zum anderen kann in der entgegengesetzten Richtung auch noch eine Axialkraft aufgenommen werden und es können Radialkräfte aufgenommen werden.

Mit dem erfindungsgemäßen Verfahren kann das Spiel eines Gleitlagers für eine Windenergieanlage eingestellt werden. Das Gleitlager weist einen ersten Lagerring auf, der in Axialrichtung aus einem ersten und einem zweiten Ringteil zusammengesetzt ist, die miteinander einen Ringraum ausbilden. Weiterhin weist das Gleitlager einen zweiten Lagerring auf, der radial in den Ringraum hineinragt und mit dem ersten Ringteil und dem zweiten Ringteil jeweils in Gleitkontakt steht. Zur Spieleinstellung wird die axiale Ausdehnung des Ringraums im in der Windenergieanlage eingebauten Zustand des Gleitlagers so eingestellt, dass sich ein gewünschtes Spiel ergibt. Die axiale Ausdehnung des Ringraums kann eingestellt werden, indem Buchsen einer entsprechenden Länge in dafür vorgesehene axiale Durchgangsbohrungen des ersten Ringteils oder des zweiten Ringteils eingesetzt werden und Verbindungsschrauben durch die Buchsen geführt werden und mit dem jeweils anderen Ringteil verschraubt werden. Weiterhin kann die axiale Ausdehnung des Ringraums auch eingestellt werden, indem Abstandshalter in dafür vorgesehene axiale Gewindebohrungen des ersten Ringteils oder des zweiten Ringteils eingeschraubt werden, wobei die Abstandshalter am jeweils anderen Ringteil axial anschlagen und dadurch den Axialabstand zwischen dem ersten Ringteil und dem zweiten Ringteil vorgeben. Insbesondere können die Abstandshalter als Buchsen mit Außengewinde ausgebildet sein, durch die hindurch die Verbindungsschrauben geführt werden, um die beiden Ringteile miteinander zu verschrauben.

Weiterhin kann die axiale Ausdehnung des Ringraums auch eingestellt werden, indem Distanzscheiben im Bereich zwischen dem ersten Ringteil und dem zweiten Ringteil angeordnet werden und die Verbindungsschrauben durch die Distanzschrauben hindurchgeführt werden.

Zur Ermittlung des Spiels des Gleitlagers kann die axiale Ausdehnung des Ringraums soweit reduziert werden, bis kein Spiel mehr vorhanden ist und das Spiel aus der Reduzierung der axialen Ausdehnung des Ringraums ermittelt werden. Diese Vorgehensweise hat den Vorteil, dass sie sehr einfach durchführbar ist und damit eine exakte Ermittlung des tatsächlich vorhandenen Spiels möglich ist. Insbesondere können zur Ermittlung des Spiels des Gleitlagers nach dem Demontieren der zugehörigen Verbindungsschrauben einige der Buchsen herausgenommen werden, die Verbindungsschrauben wieder in die entsprechenden Durchgangsbohrungen eingesetzt werden und die beiden Ringteile durch Anziehen dieser Verbindungsschrauben derart zusammengespannt werden, dass kein Spiel mehr vorhanden ist. Dies hat den Vorteil, dass das Gleitlager auch während der Spieleinstellung Axial- und Radialkräfte aufnehmen kann und dadurch beispielsweise eine zuverlässige Kippsicherung gewährleistet ist. Ein weiterer Vorteil besteht darin, dass für das Zusammenspannen der beiden Ringteile keinerlei zusätzliche Hebe- oder Spannwerkzeuge erforderlich sind, da dies mit Hilfe der ohnehin vorhandenen Verbindungsschrauben erfolgt. Schließlich hat diese Vorgehensweise noch den Vorteil, dass für die Ermittlung des Spiels nur einige wenige Verbindungsschrauben demontiert und einige wenige Buchsen entfernt werden müssen.

In einer Variante können zur Ermittlung des Spiels des Gleitlagers sämtliche Abstandshalter partiell aus den Gewindebohrungen herausgedreht werden und die beiden Ringteile durch Anziehen der Verbindungsschrauben derart zusammengespannt werden, dass kein Spiel mehr vorhanden ist. Diese Vorgehensweise hat den Vorteil, dass die Abstandshalter nicht demontiert werden müssen, sondern lediglich partiell herausgedreht werden.

In einer weiteren Variante können zur Ermittlung des Spiels des Gleitlagers der Reihe nach sämtliche Distanzscheiben entfernt werden und die beiden Ringteile durch Anziehen der Verbindungsschrauben derart zusammengespannt werden, dass kein Spiel mehr vorhanden ist.

Die Erfindung wird nachstehend anhand der in der Zeichnung dargestellten Ausführungsbeispiele erläutert.

Es zeigen:
- Figur 1: ein Ausführungsbeispiel des erfindungsgemäßen Gleitlagers im montierten Zustand in Schnittdarstellung,
- Figur 2: ein Gleitsegment in Aufsicht,
- Figur 3: eine ausschnittsweise Abbildung eines zweiten Ausführungsbeispiels des erfindungsgemäßen Gleitlagers in Schnittdarstellung und
- Figur 4: eine ausschnittsweise Abbildung eines dritten Ausführungsbeispiels des erfindungsgemäßen Gleitlagers in Schnittdarstellung.

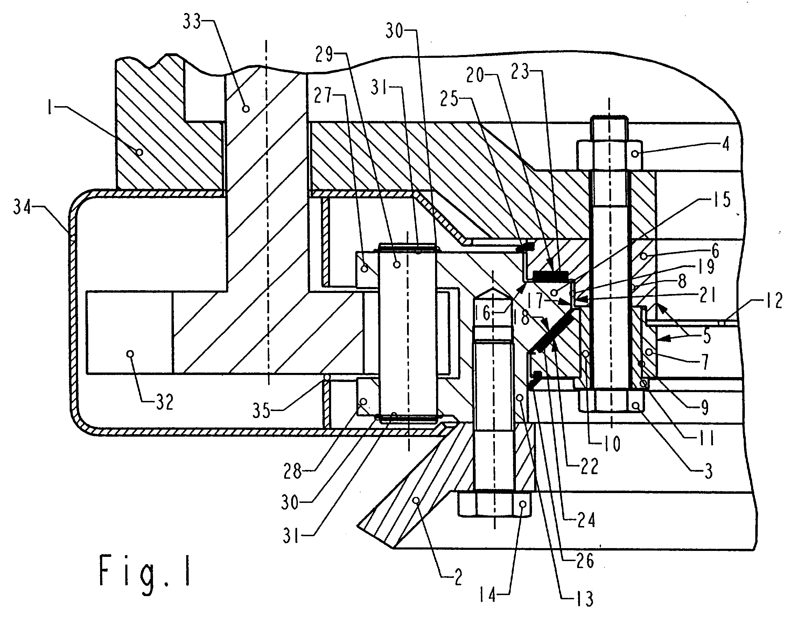

Figur 1 zeigt ein Ausführungsbeispiel des erfindungsgemäßen Gleitlagers im montierten Zustand in Schnittdarstellung. Beim dargestellten Anwendungsfall wird ein Maschinenhaus 1 einer Windenergieanlage mit Hilfe des erfindungsgemäßen Gleitlagers auf einem Turm 2 drehbar abgestützt. Das Maschinenhaus 1 ist mittels Verbindungsschrauben 3 und Muttern 4 an einem Innenring 5 angeschraubt. Der Innenring 5 besteht aus einem ersten Ringteil 6 und einem zweiten Ringteil 7, die in Axialrichtung nebeneinander angeordnet sind und ebenfalls durch die Verbindungsschrauben 3 und Muttern 4 zusammengehalten werden. Hierzu sind die Verbindungsschrauben 3 durch entsprechende Durchgangsbohrungen 8 und 9 in den Ringteilen 6 und 7 geführt. Dabei weisen die Durchgangsbohrungen 9 im zweiten Ringteil 7 jeweils einen größeren Durchmesser als die Durchgangsbohrungen 8 im ersten Ringteil 6 aus. In die Durchgangsbohrungen 9 sind jeweils Buchsen 10 eingeführt, die an einem axialen Ende einen umlaufenden Kragen 11 aufweisen, der axial am zweiten Ringteil 7 anliegt. Das andere axiale Ende der Buchse 10 stützt sich jeweils axial am ersten Ringteil 6 ab, so dass abhängig von der Länge der Buchsen 10 ein axialer Spalt 12 zwischen dem ersten Ringteil 6 und dem zweiten Ringteil 7 ausgebildet wird.

Ein Außenring 13 ist über Schrauben 14 am Turm 2 befestigt. Der Außenring 13 weist einen umlaufenden Radialvorsprung 15 auf, der radial nach innen gerichtet ist. Der Radialvorsprung 15 weist eine senkrecht zur Axialrichtung des Gleitlagers orientierte Axialfläche 16, eine senkrecht zur Radialrichtung des Gleitlagers orientierte Radialfläche 17 und eine Kegelstumpffläche 18 auf, deren Mittelachse parallel zur Axialrichtung des Gleitlagers verläuft. Sämtliche Flächen verlaufen rotationssymmetrisch um die Achse des Gleitlagers. Der Radialvorsprung 15 greift in einen zwischen den Ringteilen 6 und 7 ausgebildeten Ringraum 19 ein, der von den Flächen 16, 17 und 18 gegenüberliegenden und komplementär dazu ausgebildeten Flächen 20, 21 und 22 begrenzt wird. Die Flächen 20 und 22 sind jeweils etwas zurückversetzt, so dass Vertiefungen zur Aufnahme von Gleitsegmenten 23 und 24 entstehen. Die Gleitsegmente 23 und 24 können beispielsweise auf die Flächen 20 und 22 aufgeklebt sein und stehen im gleitenden Kontakt zu der Axialfläche 16 und der Kegelstumpffläche 18. Dabei nimmt die Gleitpaarung bestehend aus den Gleitsegmenten 23 und der Axialfläche 16 im wesentlichen das Gewicht des Maschinenhauses 1 auf und die Gleitpaarung bestehend aus den Gleitsegmenten 24 und der Kegelstumpffläche 18 sichert das Maschinenhaus 1 gegen Kippen. Das Spiel in den beiden Gleitpaarungen hängt davon ab, wie stark das erste Ringteil 6 und das zweite Ringteil 7 des Innenrings 5 mit Hilfe der Verbindungsschrauben 3 einander angenähert sind. Da diese Annäherung durch die Buchsen 10 begrenzt wird, kann das Spiel über die Länge der Buchsen 10 vorgegeben bzw. eingestellt werden.

Um einen Austritt von gegebenenfalls im Bereich der Gleitsegmente 23 und 24 eingebrachten Schmierstoff zu verhindern, ist zwischen dem ersten Ringteil 6 und dem Außenring 13 eine erste Dichtung 25 angeordnet und zwischen dem zweiten Ringteil 7 und dem Außenring 13 eine zweite Dichtung 26.

Damit das Maschinenhaus 1 relativ zum Turm 2 geschwenkt werden kann, ist der Außenring 13 mit einer Triebstockverzahnung versehen. Hierzu weist der Außenring 13 einen U-förmigen Querschnitt auf, wobei das U radial nach außen geöffnet ist. Die beiden Schenkel 27 und 28 sind mit koaxialen Durchgangsbohrungen versehen, in die jeweils ein Triebstockbolzen 29 eingeführt ist. Die Triebstockbolzen 29 sind beidseitig axial durch je einen Seeger-Ring 30 gesichert, der in eine Nut 31 des Triebstockbolzens 29 eingreift. Die unteren Seeger-Ringe 30 können dabei gegebenenfalls auch entfallen, da die Triebstockbolzen 29 bereits durch ihr Gewicht gesichert sind. In die Triebstockbolzen 29 greift ein Ritzel 32 ein, das über eine Welle 33 angetrieben wird. Dabei können auch mehrere Ritzel 32 über den Umfang verteilt angeordnet sein. Der Bereich des Triebstocks und des Ritzels 32 bzw. der Ritzel 32 ist von einer Abdeckung 34 umschlossen, die am Maschinenhaus 1 befestigt ist und jeweils bis auf einen kleinen Spalt an den Außenring 13 heranreicht. Im Bereich des Ritzels 32 bzw. der Ritzel 32 ist in der Abdeckung 34 jeweils eine Öffnung 35 vorgesehen, durch die hindurch das Ritzel 32 jeweils in die Triebstockverzahnung eingreifen kann. Die Abdeckung 34 dient dazu, den im Bereich der Triebstockverzahnung vorgehaltenen Schmierstoff zurückzuhalten und so einem Schmierstoffverlust und einer Verschmutzung der umgebenden Maschinenteile vorzubeugen.

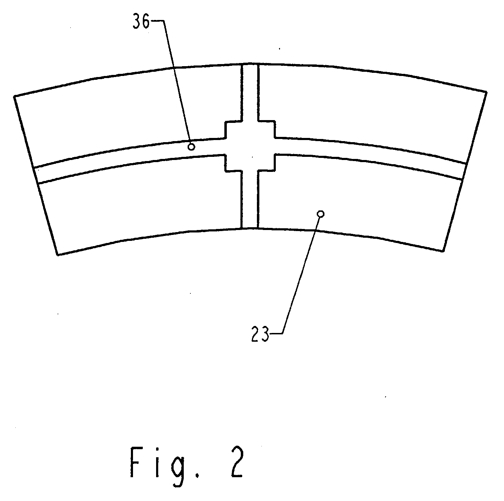

Figur 2 zeigt eine Aufsicht auf ein Gleitsegment 23. Die Gleitsegmente 24 sind entsprechend aufgebaut und besitzen nur eine geringfügig andere Form. Das Gleitsegment 23 kann aus einem Kunststoffmaterial bestehen und mit oder ohne Schmierstoff eingesetzt werden. Um die Verteilung des Schmierstoffs und dessen Deponierung im Bereich der Gleitflächen zu fördern, weist das Gleitsegment 23 Vertiefungen 36 auf. Die Befestigung des Gleitsegments 23 kann durch Kleben und/oder Verschrauben erfolgen. Hierzu ist das Gleitsegment 23 auf seiner Rückseite entsprechend aufgerauht bzw. weist das Gleitsegment 23 entsprechende Bohrungen auf. Statt des abgebildeten Gleitsegments 23 könnte auch prinzipiell ein durchgehender Gleitbelag verwendet werden. In der Regel ist das Handling einzelner Gleitsegmente 23 jedoch einfacher als das eines durchgehenden Gleitbelags. Dies gilt auch im Hinblick auf die Gleitsegmente 24.

Für eine einwandfreie Funktionsweise sowie für eine lange Lebensdauer des Gleitlagers ist es erforderlich, dass das Spiel in den Gleitpaarungen innerhalb eines festgelegten Intervalls liegt. Aus diesem Grund wird vor der ersten Inbetriebnahme bzw. nach einer Einlaufphase eine Spieleinstellung am Gleitlager vorgenommen. Diese Spieleinstellung wird wiederholt, falls während der Lebensdauer des Gleitlagers festgestellt wird, dass der tatsächliche Wert für das Spiel außerhalb des festgelegten Intervalls liegt. Insbesondere kann eine neue Einstellung des Spiels erforderlich sein, wenn es innerhalb der Einlaufphase des Gleitlagers zu einer Komprimierung der Gleitsegmente 23 und/oder 24 kommt. Ansonsten kann eine Neueinstellung des Spiels insbesondere in Folge eines über die Zeit auftretenden Verschleißes der Gleitsegmente 23 und/oder 24 erforderlich werden.

Bei der Spieleinstellung wird folgendermaßen vorgegangen: Zunächst wird das tatsächlich vorhandene Spiel ermittelt. Hierzu wird die gesamte axiale Erstreckung der Ringteile 6 und 7 des Innenrings 5 gemessen. Anschließend werden der Reihe nach einige der Muttern 4 gelöst, jeweils die zugehörige Verbindungsschraube 3 herausgenommen und die entsprechende Buchse 10 entfernt. Danach werden die Verbindungsschrauben 3 wieder eingeführt und die Muttern 4 so stark angezogen, dass jegliches Spiel aus den Gleitpaarungen entfernt wird, d. h., dass die Gleitsegmente 23 spielfrei an der Axialfläche 16 des Außenrings 13 anliegen und die Gleitsegmente 24 spielfrei an der Kegelstumpffläche 18 des Außenrings 13 anliegen. Um ein gleichmäßiges Anliegen der Gleitsegmente 23 und 24 an den Flächen 16 und 18 über den gesamten Umfang zu gewährleisten, werden die Buchsen 10 gemäß einem regelmäßigen Muster entfernt, d. h. es wird jede x-te Buchse 10 entfernt. Anschließend wird wiederum die gesamte axiale Erstreckung der beiden Ringteile 6 und 7 des Innenrings 5 gemessen und mit dem zuvor ermittelten Wert verglichen. Die Differenz aus den beiden Werten entspricht dem gesamten Axialspiel des Gleitlagers. Zur Verringerung des Axialspiels sind sämtliche Buchsen 10 jeweils um einen entsprechenden Wert axial zu kürzen. Soll das Axialspiel dagegen vergrößert werden, sind die Buchsen 10 gegen längere Buchsen 10 auszutauschen. Damit während des gesamten Einstellvorgangs die Tragfähigkeit des Gleitlagers gewährleistet bleibt, werden die Buchsen 10 der Reihe nach ausgetauscht, d. h. es wird jeweils eine Mutter 4 gelöst, die zugehörige Verbindungsschraube 3 herausgenommen und die entsprechende Buchse 10 gekürzt bzw. gegen eine längere Buchse 10 ausgetauscht und anschließend wieder montiert, die Verbindungsschraube 3 wieder eingeführt und die Mutter 4 aufgeschraubt. Bei der genannten Vorgehensweise sind keinerlei zusätzliche Hebewerkzeuge erforderlich, da der zweite Ringteil 7 des Innenrings 5 mit Hilfe der Verbindungsschrauben 3 angehoben wird. Weiterhin ist das Maschinenhaus 1 während des gesamten Einstellvorgangs durch die jeweils verbleibenden Verbindungsschrauben 3 gegen Kippen gesichert.

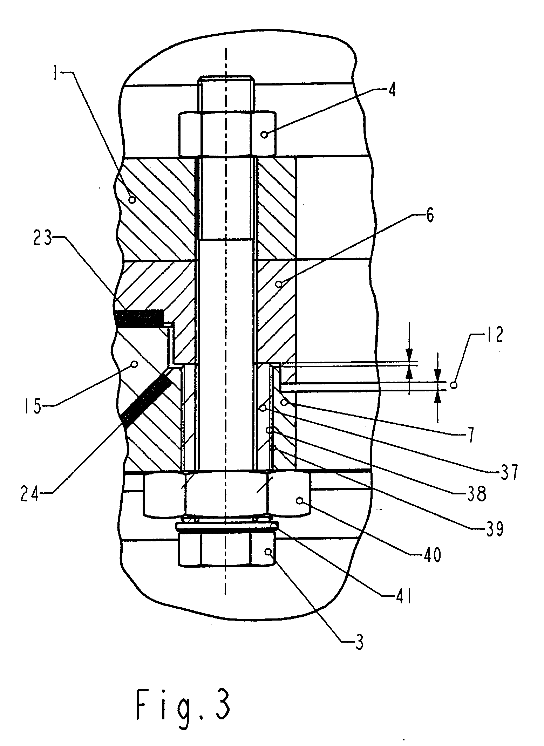

Figur 3 zeigt eine ausschnittsweise Abbildung eines zweiten Ausführungsbeispiels des erfindungsgemäßen Gleitlagers in Schnittdarstellung. Das zweite Ausführungsbeispiel unterscheidet sich von dem in Figur 1 dargestellten hinsichtlich der Komponenten für die Spieleinstellung. Der dargestellte Ausschnitt beschränkt sich daher auf den Bereich, in dem diese Komponente angeordnet sind. Die beiden Ringteile 6 und 7 des Innenrings sind wiederum durch die Verbindungsschrauben 3 und den Muttern 4 miteinander verschraubt. Dabei ist im zweiten Ringteil 7 die Verbindungsschraube 3 durch eine Gewindebuchse 37 geführt, die ein Außengewinde 38 aufweist, und in eine Gewindebohrung 39 im zweiten Ringteil eingeschraubt ist. Die Gewindebuchse 37 ist durch eine Kontermutter 40 gegen Verdrehen gesichert. Auf der Kontermutter 40 ist eine Unterlegscheibe 41 angeordnet, an der die Verbindungsschraube 3 axial anliegt. Beim zweiten Ausführungsbeispiel ist eine Spieleinstellung jeweils durch Lösen der Kontermutter 40 und Verdrehen der Gewindebuchse 37 möglich.

Im einzelnen erfolgt die Spieleinstellung beim zweiten Ausführungsbeispiel folgendermaßen: Zunächst wird wiederum die gesamte axiale Erstreckung der beiden Ringteile 6 und 7 des Innenrings 5 ermittelt. Anschließend werden der Reihe nach die Verbindungsschrauben 3 demontiert, die Kontermuttern 40 gelöst, die Gewindebuchsen 37 partiell aus dem zweiten Ringteil 7 des Innenrings 5 herausgedreht, die Verbindungsschrauben 3 wieder montiert und mit den Muttern 4 angezogen. Anschließend wird die gesamte axiale Erstreckung der beiden Ringteile 6 und 7 des Innenrings 5 abermals gemessen und mit dem zuvor ermittelten Wert verglichen. Die Differenz der beiden Werte entspricht dem gesamten Axialspiel. Die Verbindungsschrauben 3 werden wieder demontiert und die Gewindebuchsen 37 werden relativ zu ihrer ursprünglichen Position soweit verdreht, dass sich das gewünschte Spiel ergibt. In dieser Position werden die Gewindebuchsen 37 mit Hilfe der Kontermuttern 40 gegen Verdrehen gesichert. Schließlich werden die Verbindungsschrauben 3 wieder montiert und die Muttern 4 angezogen. Auch hier ist zu beachten, dass bei der Ermittlung bzw. der Einjustierung des Spiels jeweils nur eine oder nur einige wenige Verbindungsschrauben 3 zum selben Zeitpunkt demontiert sind, damit auch für diesen Zeitpunkt eine wirksame Kippsicherung des Maschinenhauses 1 sichergestellt ist.

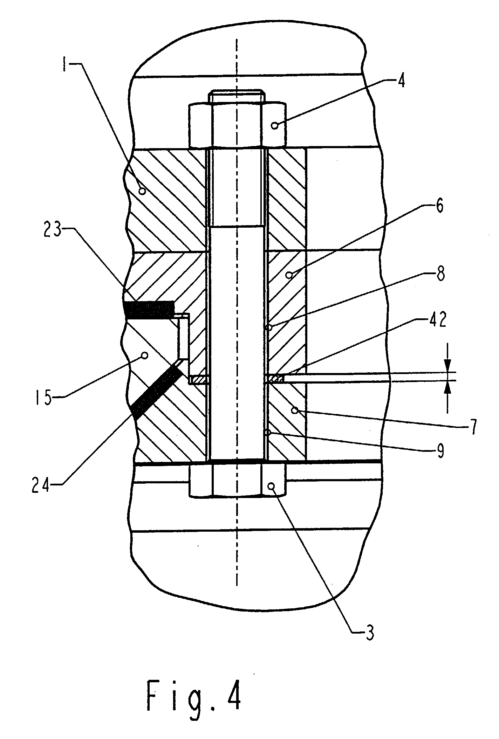

Figur 4 zeigt eine ausschnittsweise Abbildung eines dritten Ausführungsbeispiels des erfindungsgemäßen Gleitlagers in Schnittdarstellung. Es wurde der gleiche Ausschnitt gewählt, wie in Figur 3. Die Besonderheit beim dritten Ausführungsbeispiel besteht darin, dass die Spieleinstellung mit Hilfe von Distanzscheiben 42 erfolgt, mit denen der axiale Abstand zwischen den beiden Ringteilen 6 und 7 des Innenrings 5 eingestellt wird. Die Distanzscheiben 42 sind axial zwischen den beiden Ringteilen 6 und 7 des Innenrings 5 angeordnet und nehmen jeweils eine der Verbindungsschrauben 3 auf, mit deren Hilfe die beiden Ringteile 6 und 7 miteinander verschraubt sind. Da beim dritten Ausführungsbeispiel keine Buchsen 10 bzw. Gewindebuchsen 37 vorgesehen sind, sind die Durchgangsbohrungen 8 im ersten Ringteil 6 und 9 im zweiten Ringteil 7 des Innenrings 5 jeweils glatt und mit gleichem Durchmesser ausgeführt. Um das Spiel des Gleitlagers zu verändern, werden lediglich die Distanzscheiben 42 ausgetauscht, wobei durch das Einsetzen dickerer Distanzscheiben 42 das Spiel vergrößert wird und durch das Einsetzen dünnerer Distanzscheiben 42 das Spiel verkleinert wird.

Im einzelnen läuft die Spieleinstellung beim dritten Ausführungsbeispiel folgendermaßen ab: Wie bei den anderen Ausführungsbeispielen wird zunächst die gesamte axiale Erstreckung der beiden Ringteile 6 und 7 des Innenrings 5 gemessen. Anschließend werden die Verbindungsschrauben 3 der Reihe nach demontiert, die Distanzscheiben 42 entfernt, die Verbindungsschrauben 3 wieder montiert und die Muttern 4 aufgeschraubt, aber noch nicht angezogen. Wenn auf diese Weise alle Distanzscheiben 42 entfernt sind, werden die Muttern 4 angezogen und es wird abermals die gesamte axiale Erstreckung der beiden Ringteile 6 und 7 des Innenrings 5 gemessen. Aus der Differenz der Messwerte wird das bei den bislang eingesetzten Distanzscheiben 42 vorhandene Spiel ermittelt. Falls eine Änderung des Spiels erwünscht ist, werden die Distanzscheiben 42 gegen dickere bzw. dünnere Distanzscheiben 42 ausgetauscht. Der Austausch der Distanzscheiben 42 erfolgt dabei wiederum einzeln der Reihe nach, um das Maschinenhaus 1 während des gesamten Vorgangs sicher zu fixieren.

Bei allen Ausführungsformen kann die Ermittlung des aktuellen Spiels durch den Einsatz einer Erfassungseinrichtung zur Erfassung der Änderung des Abstandes zwischen den beiden Ringteilen 6 und 7 automatisiert werden. Ausgehend von einem Startwert für den Abstand, der einem Startwert für die gesamt axiale Erstreckung der beiden Ringteile 6 und 7 bzw. für die axiale Ausdehnung des Ringraums 19 bei einem bekannten Wert für das Axialspiel entspricht, kann jeweils der aktuelle Wert für das Axialspiel ermittelt werden. Dabei wird der Einfluss der Gleitpaarung bestehend aus der Kegelstumpffläche 18 des Außenrings 13 und dem Gleitsegment 24 auf die Spieländerung vernachlässigt und die Spieländerung mit der Abstandsänderung bzw. der Änderung der gesamten axialen Erstreckung der beiden Ringteile 6 und 7 oder des Ringraums 19 gleichgesetzt. Da die Axiallast bei der Lagerung des Maschinenhauses 1 hauptsächlich auf die Gleitpaarung Axialfläche des Außenrings 13/Gleitsegment 23 wirkt, liefert diese Näherung gute Ergebnisse. Durch die Erfassungseinrichtung ist somit eine fortwährende Überwachung des Axialspiels möglich, so dass eine Spieleinstellung genau zu dem Zeitpunkt vorgenommen werden kann, zu dem dies erforderlich ist.

Alternativ zur dargestellten Lagerung des Maschinenhauses 1 kann das erfindungsgemäße Gleitlager auch zur Lagerung der einzelnen Rotorblätter der Windenergieanlage eingesetzt werden und ein Schwenken der Rotorblätter um deren Längsachse ermöglichen. Diese Schwenkbewegung ist erforderlich, um den Anstellwinkel der einzelnen Rotorblätter an die jeweiligen Windverhältnisse anzupassen.

### Bezugszeichen

- 1: Maschinenhaus
- 2: Turm
- 3: Verbindungsschraube
- 4: Mutter
- 5: Innenring
- 6: erstes Ringteil (Innenring 5)
- 7: zweites Ringteil (Innenring 5)
- 8: Durchgangsbohrung (erstes Ringteil 6)
- 9: Durchgangsbohrung (zweites Ringteil 7)
- 10: Buchse
- 11: Kragen
- 12: Spalt
- 13: Außenring
- 14: Schraube
- 15: Radialvorsprung (Außenring 13)
- 16: Axialfläche (Außenring 13)
- 17: Radialfläche (Außenring 13)
- 18: Kegelstumpffläche (Außenring 13)
- 19: Ringraum
- 20: Axialfläche (erstes Ringteil 6)
- 21: Radialfläche (erstes Ringteil 6)
- 22: Kegelstumpffläche (zweites Ringteil 7)
- 23: Gleitsegment
- 24: Gleitsegment
- 25: Dichtung
- 26: Dichtung
- 27: erster Schenkel (Außenring 13)
- 28: zweiter Schenkel (Außenring 13)
- 29: Triebstockbolzen
- 30: Seeger-Ring
- 31: Nut (Triebstockbolzen 29)
- 32: Ritzel
- 33: Welle
- 34: Abdeckung
- 35: Öffnung
- 36: Vertiefung (Gleitbelag 23)
- 37: Gewindebuchse
- 38: Außengewinde (Gewindebuchse 37)
- 39: Gewindebohrung (zweites Ringteil 7)
- 40: Kontermutter
- 41: Unterlegscheibe
- 42: Distanzscheibe

## Patentansprüche

1. Gleitlager für eine Windenergieanlage mit einem ersten Lagerring (5), der in Axialrichtung aus einem ersten Ringteil (6) und einem zweiten Ringteil (7) zusammengesetzt ist, die miteinander einen Ringraum (19) ausbilden, und einem zweiten Lagerring (13), der radial in den Ringraum (19) hineinragt und mit dem ersten Ringteil (6) und dem zweiten Ringteil (7) jeweils in Gleitkontakt steht, **dadurch gekennzeichnet, dass** das Gleitlager eine Einrichtung zur Einstellung eines vorgebbaren Wertes für die axiale Ausdehnung des Ringraums (19) im in der Windenergieanlage eingebauten Zustand des Gleitlagers aufweist.

2. Gleitlager nach Anspruch 1, **dadurch gekennzeichnet, dass** die Einrichtung zur Einstellung der axialen Ausdehnung des Ringraums (19) wenigstens ein Anschlagelement umfasst, das die axiale Annäherung des ersten (6) und des zweiten Ringteils (7) aneinander begrenzt.

3. Gleitlager nach einem der vorhergehenden Ansprüche, **dadurch gekennzeichnet, dass** das erste (6) und das zweite Ringteil (7) durch in Axialrichtung verlaufende Verbindungsschrauben (3) miteinander verbunden sind.

4. Gleitlager nach Anspruch 3, **dadurch gekennzeichnet, dass** die Anschlagelemente als Buchsen (10, 37) zur Aufnahme der Verbindungsschrauben (3) im Bereich des ersten Ringteils (6) oder des zweiten Ringteils (7) ausgebildet sind.

5. Gleitlager nach Anspruch 4, **dadurch gekennzeichnet, dass** die Buchsen (10) in axialen Durchgangsbohrungen (9) im ersten Ringteil (6) oder im zweiten Ringteil (7) angeordnet sind, die kürzer sind als die Buchsen (10), so dass die axiale Ausdehnung des Ringraums (19) durch die Länge der Buchsen (10) vorgegeben wird.

6. Gleitlager nach Anspruch 4, **dadurch gekennzeichnet, dass** die Buchsen (37) jeweils ein Außengewinde (38) aufweisen, das in eine Gewindebohrung (39) im ersten Ringteil (6) oder im zweiten Ringteil (7) eingreift, so dass die axiale Ausdehnung des Ringraums (19) durch Verdrehen der Buchsen (37) einstellbar ist.

7. Gleitlager nach einem der Ansprüche 1 bis 3, **dadurch gekennzeichnet, dass** die Anschlagelemente als Distanzscheiben (42) ausgebildet sind, die zwischen dem ersten Ringteil (6) und dem zweiten Ringteil (7) angeordnete sind.

8. Gleitlager nach einem der vorhergehenden Ansprüche, **dadurch gekennzeichnet, dass** es eine Erfassungseinrichtung zur Erfassung der Änderung der axialen Ausdehnung des Ringraums (19) oder einer damit zusammenhängenden Größe aufweist.

9. Gleitlager nach einem der vorhergehenden Ansprüche, **dadurch gekennzeichnet, dass** sich im Bereich des Ringraums (19) jeweils eine Axialfläche (20) des ersten Ringteils (6) des ersten Lagerrings (5) und eine Axialfläche (16) des zweiten Lagerrings (13) sowie eine Kegelstumpffläche (22) des zweiten Ringteils (7) des ersten Lagerrings (5) und eine Kegelstumpffläche (18) des zweiten Lagerrings (13) zur Ausbildung eines direkten oder indirekten Gleitkontakts gegenüberstehen.

10. Verfahren zum Einstellen des Spiels eines Gleitlagers für eine Windenergieanlage mit einem ersten Lagerring (5), der in Axialrichtung aus einem ersten (6) und einem zweiten Ringteil (7) zusammengesetzt ist, die miteinander einen Ringraum (19) ausbilden, und einem zweiten Lagerring (13), der radial in den Ringraum (19) hineinragt und mit dem ersten Ringteil (6) und dem zweiten Ringteil (7) jeweils in Gleitkontakt steht, **dadurch gekennzeichnet, dass** die axiale Ausdehnung des Ringraums (19) im in der Windenergieanlage eingebauten Zustand des Gleitlagers so eingestellt wird, dass sich ein gewünschtes Spiel ergibt.

11. Verfahren nach Anspruch 10, **dadurch gekennzeichnet, dass** die axiale Ausdehnung des Ringraums (19) eingestellt wird, indem Buchsen (10) einer entsprechenden Länge in dafür vorgesehene axiale Durchgangsbohrungen (9) des ersten Ringteils (6) oder des zweiten Ringteils (7) eingesetzt werden und Verbindungsschrauben (3) durch die Buchsen (10) geführt werden und mit dem jeweils anderen Ringteil (6, 7) verschraubt werden.

12. Verfahren nach Anspruch 10, **dadurch gekennzeichnet, dass** die axiale Ausdehnung des Ringraums (19) eingestellt wird, indem Abstandshalter (37) in dafür vorgesehene axiale Gewindebohrungen (39) des ersten Ringteils (6) oder des zweiten Ringteils (7) eingeschraubt werden, wobei die Abstandshalter (37) am jeweils anderen Ringteil (6, 7) axial anschlagen und dadurch den Axialabstand zwischen dem ersten Ringteil (6) und dem zweiten Ringteil (7) vorgeben.

13. Verfahren nach Anspruch 12, **dadurch gekennzeichnet, dass** die Abstandshalter (37) als Buchsen mit Außengewinde (38) ausgebildet sind, durch die hindurch die Verbindungsschrauben (3) geführt werden, um die beiden Ringteile (6, 7) miteinander zu verschrauben.

14. Verfahren nach Anspruch 10, **dadurch gekennzeichnet, dass** die axiale Ausdehnung des Ringraums (19) eingestellt wird, indem Distanzscheiben (42) im Bereich zwischen dem ersten Ringteil (6) und dem zweiten Ringteil (7) angeordnet werden und die Verbindungsschrauben (3) durch die Distanzscheiben (42) hindurchgeführt werden.

15. Verfahren nach einem der Ansprüche 10 bis 14, **dadurch gekennzeichnet, dass** zur Ermittlung des Spiels des Gleitlagers die axiale Ausdehnung des Ringraums (19) soweit reduziert wird, bis kein Spiel mehr vorhanden ist und das Spiel aus der Reduzierung der axialen Ausdehnung des Ringraums (19) ermittelt wird.

16. Verfahren nach Anspruch 11, **dadurch gekennzeichnet, dass** zur Ermittlung des Spiels des Gleitlagers nach dem Demontieren der zugehörigen Verbindungsschrauben (3) einige der Buchsen (10) herausgenommen werden, die Verbindungsschrauben (3) durch die Durchgangsbohrungen (8, 9) hindurchgefühlt werden und die beiden Ringteile (6, 7) durch Anziehen dieser Verbindungsschrauben (3) derart zusammengespannt werden, dass kein Spiel mehr vorhanden ist.

17. Verfahren nach Anspruch 12, **dadurch gekennzeichnet, dass** zur Ermittlung des Spiels des Gleitlagers sämtliche Abstandshalter (37) partiell aus den Gewindebohrungen (39) herausgedreht werden und die beiden Ringteile (6, 7) durch Anziehen der Verbindungsschrauben (3) derart zusammengespannt werden, dass kein Spiel mehr vorhanden ist.

18. Verfahren nach Anspruch 14, **dadurch gekennzeichnet, dass** zur Ermittlung des Spiels des Gleitlagers der Reihe nach sämtliche Distanzscheiben (42) entfernt werden und die beiden Ringteile (6, 7) durch Anziehen der Verbindungsschrauben (3) derart zusammengespannt werden, dass kein Spiel mehr vorhanden ist.
